# DEMANDE DE BREVET EUROPEEN

(11) **EP 1 918 848 A1**
(43) Date de publication de la demande: **07.05.2008**
(21) Numéro de dépôt: 07119549.9
(22) Date de dépôt: 29.10.2007
(51) Int. Cl.: G06K 7/00

(54) **Système d'analyse de communications radiofréquence**

(30) Priorité: 03.11.2006 FR 0654710
(71) Demandeur: Raisonance, 38330 Montbonnot Saint Martin (FR); COMMISSARIAT A L'ENERGIE ATOMIQUE, 75015 Paris (FR)
(72) Inventeur: Hedou, Benoît, 38190, LES ADRETS (FR); Lamotte, Francis, 38920, CROLLES (FR); Thomas, Thierry, 38760, VARCES ALLIERES ET RISSET (FR); Zeller, Clément, 38000, GRENOBLE (FR)
(74) Mandataire: de Beaumont, Michel

(57) **Abrégé**

L'invention concerne un système d'analyse d'une communication radiofréquence entre deux éléments et un dispositif (90) de mesure de variations d'un champ magnétique généré par un premier élément et susceptible d'être modulé par ce premier élément ainsi que par un deuxième élément distinct présent dans le champ, un premier enroulement (51) étant adapté au premier élément et un deuxième enroulement (61) étant adapté au deuxième élément.

## Description

### Domaine de l'invention

La présente invention concerne les communications radiofréquence et, plus particulièrement, les communications entre un terminal générant un champ magnétique et un élément mobile (transpondeur) présent dans ce champ.

L'invention concerne l'analyse de communications entre un terminal et un transpondeur par un dispositif externe à ces deux éléments à des fins de test.

### Exposé de l'art antérieur

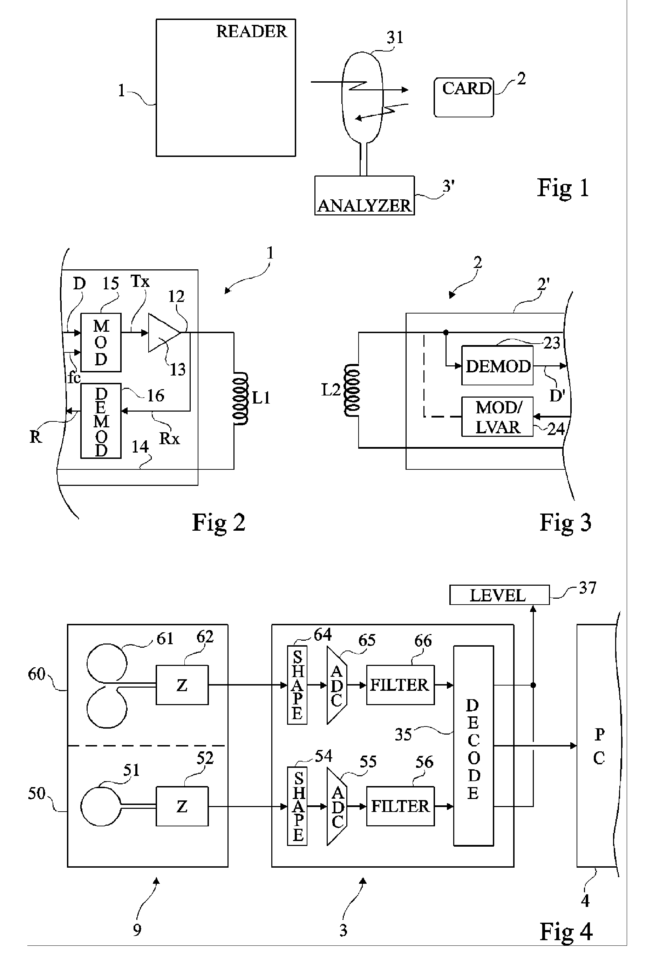

La figure 1 représente, de façon très schématique et sous forme de blocs, un exemple de système d'analyse usuel de communications entre un lecteur 1 (READER) et un transpondeur 2 (CARD), dans cet exemple une carte à puce sans contact.

Le transpondeur 2 est susceptible de communiquer sans contact et sans fil avec le terminal 1. Le plus souvent, le transpondeur 2 est dépourvu d'alimentation autonome, c'est-à-dire qu'il extrait l'alimentation nécessaire aux circuits électroniques qu'il comporte, d'un champ haute fréquence rayonné par une antenne du terminal. Le fonctionnement est basé sur l'emploi de circuits oscillants côté terminal et côté transpondeur. Ces circuits sont destinés à être couplés par champ magnétique proche (le plus souvent moins de quelques dizaines de centimètres) lorsque le transpondeur entre dans le champ du terminal.

La transmission d'informations du terminal vers la carte s'effectue par une modulation d'amplitude du signal d'excitation haute fréquence de l'antenne du terminal qui se traduit par une modulation du champ qu'il produit. Dans le sens transpondeur vers terminal, la transmission s'effectue par modulation de l'impédance connectée au circuit d'antenne du transpondeur qui se traduit par une modulation de la charge sur le champ du terminal, détectable par celui-ci.

Pour capter les communications à des fins de test, on utilise habituellement une sonde 31 constituée d'un enroulement conducteur que l'on place entre les deux éléments 1 et 2. Le signal, capté par cet enroulement, est analysé par un dispositif 3' (ANALYZER), généralement dénommé analyseur de protocole et basé sur un traitement numérique des signaux. Cet analyseur sert à reconstituer les signaux échangés entre les éléments 1 et 2 à partir de mesures des variations de champ.

Un des objectifs des analyses de protocoles est de vérifier l'interopérabilité des différents dispositifs. En effet, le terminal est généralement fabriqué par une entité différente du transpondeur et différents transpondeurs sont susceptibles de fonctionner avec un même terminal et inversement. Il en résulte un besoin de tests en situation, notamment pour contrôler le transfert d'informations.

L'analyse du champ exploite le fait que la tension disponible aux bornes de l'enroulement 31 peut être considérée proportionnelle aux variations de champ magnétique appliqué à cet enroulement.

Un problème qui se pose est que les informations du lecteur sont plus facilement exploitables que les informations provenant du transpondeur. Cela provient entre autres du fait que l'amplitude des variations imposées par le terminal est plus élevée donc plus facile à détecter que celle des variations imposées par la carte.

Un autre problème est que la sonde doit perturber le moins possible la communication afin d'obtenir des résultats de test fiables.

Un autre problème est que lorsque l'un des deux éléments 1 et 2 module le champ magnétique pour effectuer une communication selon un protocole donné, la réaction du second élément tend à perturber l'interprétation des mesures.

### Résumé de l'invention

La présente invention vise à pallier tout ou partie des inconvénients des systèmes d'analyse de communications radiofréquence à courte portée.

L'invention vise plus particulièrement un système d'analyse pourvu d'un dispositif de mesure amélioré.

Pour atteindre tout ou partie de ces objets ainsi que d'autres, la présente invention prévoit un dispositif de mesure de variations d'un champ magnétique généré par un premier élément et susceptible d'être modulé par ce premier élément ainsi que par un deuxième élément distinct présent dans le champ, caractérisé en ce qu'il comporte un premier enroulement adapté au premier élément et un deuxième enroulement adapté au deuxième élément, le dispositif de mesure étant distinct des deux éléments.

Selon un mode de réalisation de la présente invention, le deuxième enroulement comporte au moins deux boucles associées de telle sorte que le courant induit par le champ du premier élément change de sens d'une boucle à l'autre, les deux boucles étant électriquement en série.

Selon un mode de réalisation de la présente invention, une première boucle du deuxième enroulement a une forme et une taille telles que cette boucle peut s'inscrire à l'intérieur du tracé d'une antenne plane du deuxième élément, une deuxième boucle ayant une forme et une taille telles à être alors à l'extérieur dudit tracé.

Selon un mode de réalisation de la présente invention, les boucles du deuxième enroulement ont des formes et tailles telles qu'elles peuvent s'inscrire à l'intérieur du tracé d'une antenne plane du deuxième élément, une des deux boucles étant plus centrale que l'autre par rapport à ce tracé.

Selon un mode de réalisation de la présente invention, une première boucle a la forme approximative d'une pince d'une taille telle que ses mâchoires peuvent s'inscrire à l'intérieur du tracé de l'antenne du deuxième élément, une deuxième boucle ayant un tracé s'inscrivant approximativement à l'intérieur de la première boucle.

Selon un mode de réalisation de la présente invention, les surfaces définies par les deux boucles sont approximativement égales.

Selon un mode de réalisation de la présente invention, le premier enroulement forme une boucle en forme de pince d'une taille telle que le tracé d'une antenne plane du deuxième élément est propre à s'inscrire entre les tracés externe et interne des mâchoires de la pince.

Selon un mode de réalisation de la présente invention, les deux enroulements sont réalisés sur un même support.

L'invention prévoit également un système d'analyse d'une communication radiofréquence entre un premier élément d'émission d'un champ magnétique capté par un deuxième élément susceptible de moduler ce champ, comportant :
un dispositif de mesure distinct des deux éléments et pourvu de deux enroulements respectivement adaptés au premier et au deuxième éléments ; et
un dispositif d'analyse pourvu de deux voies d'acquisition respectivement dédiées aux deux enroulements.

Selon un mode de réalisation de la présente invention, chaque voie d'acquisition comporte un convertisseur analogique-numérique synchrone.

Selon un mode de réalisation de la présente invention, le système comporte un dispositif pourvu d'un indicateur visuel d'aide au positionnement d'au moins un des enroulements par rapport au deuxième élément au moyen d'une mesure d'amplitude du signal détecté.

Selon un mode de réalisation de la présente invention, le deuxième élément est une carte à puce sans contact et le premier élément est un lecteur de cartes.

L'invention prévoit également un procédé d'analyse de communications radiofréquence.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 décrite précédemment représente, de façon très schématique et sous forme de blocs, un exemple de système usuel d'analyse de protocole ;
la figure 2 représente partiellement, de façon très schématique et sous forme de blocs, un exemple d'architecture d'un terminal du type auquel s'applique la présente invention ;
la figure 3 représente partiellement, de façon très schématique et sous forme de blocs, un exemple d'architecture d'un transpondeur du type auquel s'applique la présente invention ;
la figure 4 représente, de façon très schématique et sous forme de blocs, un mode de réalisation d'un système d'analyse selon la présente invention ;
la figure 5 représente, de façon très schématique et sous forme de blocs, un exemple de réalisation d'une partie du système de la figure 4 ;
la figure 6 est une vue de dessus schématique d'une carte à puce sans contact ;
la figure 7 illustre le fonctionnement d'un système selon un mode de réalisation de la présente invention ;
les figures 8A, 8B et 8C illustrent, sous forme de chronogrammes et de façon très schématique, un exemple d'allure de signaux en différents points d'une branche d'acquisition du système de la figure 4, adaptée à un terminal ;
les figures 9A, 9B et 9C illustrent, sous forme de chronogrammes et de façon très schématique, un exemple d'allure de signaux en différents points d'une branche d'acquisition du système de la figure 4, adaptée à un transpondeur ;
la figure 10 est une vue de dessus d'une sonde adaptée à la mesure du champ d'un terminal selon un mode de réalisation de la présente invention ;
la figure 11 est une vue de dessus d'une sonde adaptée à la mesure du champ d'une carte à puce selon un mode de réalisation de la présente invention ;
la figure 12 représente le schéma électrique d'un circuit d'interface entre un enroulement de mesure de champ et un dispositif d'acquisition selon un mode de réalisation de la présente invention ; et
la figure 13 est une vue de dessus schématique d'un mode de réalisation préféré d'un dispositif de mesure selon la présente invention, destiné à une carte à puce sans contact.

### Description détaillée

De mêmes éléments ont été désignés par de mêmes références aux différentes figures qui ont été tracées sans respect d'échelle. De plus, seuls les éléments qui sont utiles à la compréhension de l'invention ont été représentés et seront décrits. En particulier, les mécanismes de codage des données à transmettre, que ce soit dans le sens terminal vers transpondeur ou transpondeur vers terminal n'ont pas été détaillés, l'invention étant compatible avec les protocoles classiques qui sont fixés le plus souvent par des normes. De plus, l'exploitation après numérisation des signaux obtenus par l'analyseur de protocole n'a pas été détaillée, l'invention étant, là encore, compatible avec les techniques habituellement utilisées.

La présente invention sera décrite en relation avec un exemple de carte à puce sans contact et de lecteur de carte. Elle s'applique toutefois plus généralement à tout système de communication radiofréquence à faible distance, plus particulièrement pour des transpondeurs téléalimentés.

Les figures 2 et 3 représentent, de façon très schématique et partielle, des exemples de terminal 1 et de transpondeur 2.

Le terminal 1 est pourvu d'un circuit oscillant basé sur une antenne L1 connectée à une borne 12 de sortie d'un amplificateur ou coupleur d'antenne 13 et à une borne 14 à un potentiel de référence (généralement la masse). L'amplificateur 13 reçoit un signal Tx à transmettre qui est fourni par un modulateur 15 (MOD). Le modulateur 15 reçoit principalement un signal de données D à transmettre et une fréquence fc de porteuse. Le signal Tx est transmis qu'il y ait des données D ou non à transmettre dans la mesure où le champ magnétique généré sur la base du signal Tx sert de source d'énergie au transpondeur 2 (figure 3). Les données D à transmettre proviennent généralement d'un système numérique, par exemple, un microprocesseur (non représenté). Le terminal comporte également un démodulateur 16 (DEMOD) pour détecter d'éventuelles données reçues du transpondeur 2. Par exemple, le démodulateur 16 reçoit la tension prélevée aux bornes de l'antenne L1 (signal Rx) et le démodulateur fournit un signal de données reçues R.

Côté transpondeur 2 (figure 3), un circuit oscillant ayant une antenne L2 est destiné à capter le champ engendré par le circuit oscillant du terminal 1. Dans cet exemple, des bornes 21 et 22 de l'antenne L2 sont connectées à un circuit intégré 2' d'exploitation des signaux. Ce circuit comporte notamment un démodulateur 23 pour démoduler les signaux émis par le terminal. Les signaux issus du démodulateur 23 constituent les signaux de données D' reçus du terminal 1 et sont envoyés au reste du circuit intégré 2' incluant, par exemple, un microcontrôleur ou un circuit en logique câblée, dont une horloge de fonctionnement est extraite du signal aux bornes du circuit oscillant. Pour émettre des données vers le terminal 1, le transpondeur 2 comporte un élément 24 (MOD LVAR) d'impédance variable capable de modifier la charge constituée par ses propres circuits électroniques sur son circuit résonnant.

Quand le transpondeur 2 se trouve dans le champ du terminal 1, une tension haute fréquence est engendrée aux bornes de son circuit résonant. Cette tension, une fois redressée et filtrée par le circuit 2', fournit une tension d'alimentation aux différents circuits électroniques du transpondeur 2. Dans le sens transpondeur vers terminal, la modulation des données à transmettre est généralement appelée rétromodulation et est effectuée à un rythme inférieur à la fréquence fc d'excitation du circuit oscillant du terminal.

Lorsque le circuit de rétromodulation 24 accroît la charge du transpondeur sur le circuit oscillant du terminal, le circuit oscillant du transpondeur est soumis à un amortissement supplémentaire par rapport à la charge constituée par les autres circuits, ce qui engendre que le transpondeur prélève une quantité d'énergie plus importante du champ haute fréquence. Côté terminal 1, cette variation d'énergie se traduit par une variation du courant dans l'antenne L1 dans la mesure où l'amplificateur 13 maintient l'amplitude du signal d'excitation haute fréquence constante ou entre deux états fixés par une modulation d'amplitude.

Dans un système de communication carte-lecteur, le champ peut être décomposé en deux composantes dues respectivement au lecteur et au transpondeur. On peut distinguer un champ désigné arbitrairement primaire produit par l'enroulement de l'antenne du lecteur (L1, figure 2) d'un champ nommé arbitrairement secondaire produit par l'enroulement de l'antenne de la carte (L2, figure 3). Le champ primaire est modulé lors d'une communication lecteur vers carte. Le champ secondaire est modulé lors d'une rétromodulation (transmission carte vers lecteur).

Le champ primaire produit par le lecteur, appliqué à la carte, peut dans des systèmes à faible distance être considéré comme à peu près homogène sur l'ensemble de l'enroulement de la carte. Par contre, le champ secondaire ne peut pas être considéré comme homogène à proximité de la carte.

La figure 4 représente, de façon très schématique et sous forme de blocs, un mode de réalisation d'un système selon la présente invention.

Ce système comporte un dispositif de mesure 9 fournissant des signaux à un circuit d'analyse 3 dont les résultats sont, par exemple, stockés pour interprétation dans un ordinateur 4 (PC).

Le dispositif de mesure 9 comporte deux circuits d'acquisition ou sondes 50 et 60 respectivement adaptés aux signaux transmis par le lecteur 1 et à ceux transmis par la carte 2. Chaque circuit 50 ou 60 comporte un enroulement conducteur 51 et 61. Les extrémités respectives des enroulements 51 et 61 sont reliées à des bornes d'entrée de circuits 52 et 62 (Z) d'impédances élevées pour éviter de perturber les communications par les mesures. Les signaux fournis par les circuits 52 et 62 sont envoyés au circuit 3 qui, selon ce mode de réalisation, comporte deux voies d'acquisition parallèles respectivement dédiées aux circuits 50 et 60. Chaque voie comporte un circuit de mise en forme 54, 64 (SHAPE) des signaux analogiques consistant à extraire la tension représentant la force électromagnétique induite dans l'enroulement 51, respectivement 61. La mise en forme est suivie d'un convertisseur analogique-numérique 55, 65 (ADC). Les signaux numériques obtenus sont alors soumis à un filtrage numérique 56, 66 (FILTER) pour extraire les informations de la sous-porteuse. Les signaux représentant l'enveloppe des signaux modulés sont alors décodés (bloc 35, DECODE) de façon à être en mesure d'interpréter les échanges entre le terminal et le transpondeur. L'objectif est par exemple de retrouver, dans les transmissions, des trames particulières de communication entre les deux éléments de façon à vérifier le respect de normes.

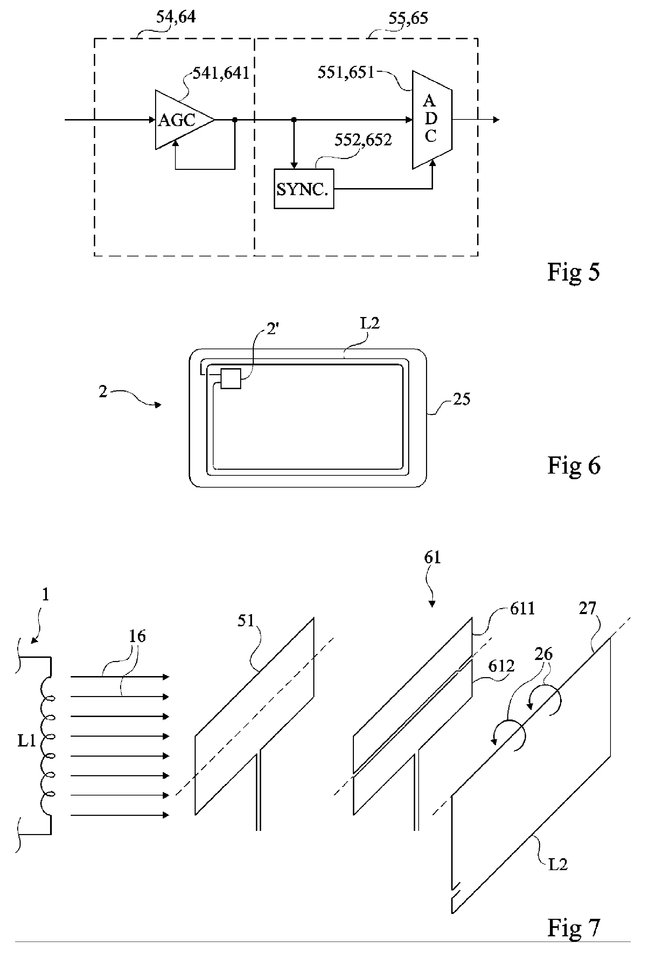

La figure 5 présente, de façon très schématique et sous forme de blocs, un exemple de circuit de mise en forme 54 ou 64 suivi d'un convertisseur analogique-numérique 55 ou 65.

Le circuit de mise en forme 55 ou 65 comporte principalement un amplificateur 541 ou 561 à contrôle automatique de gain (AGC) pour normaliser l'amplitude de la porteuse des signaux reçus. Cela permet entre autres de compenser les variations d'amplitude provenant de la position de la sonde correspondante dans le champ et de faire fonctionner le convertisseur 55 ou 65 à pleine échelle.

Côté conversion, la porteuse du signal reçu est échantillonnée de façon synchrone (blocs 552, 652 - SYNC) pour cadencer le convertisseur analogique-numérique 551 ou 651 proprement dit. Un avantage du recours à une conversion synchrone est que la démodulation s'effectue en même temps que la numérisation de la porteuse. De tels convertisseurs synchrones sont en eux-mêmes connus.

La figure 6 représente, de façon très schématique, un exemple de carte à puce à laquelle s'applique l'invention. Une telle carte est constituée d'un support 25, généralement en matière plastique, sur ou dans lequel sont encartés un ou plusieurs circuits électroniques 2'. Une antenne L2 formée d'un enroulement conducteur plan d'une ou plusieurs spires, par exemple rectangulaires, a ses extrémités reliées au circuit 2'.

La figure 7 est une vue en perspective illustrant le fonctionnement d'un système selon un mode de réalisation de la présente invention. Pour simplifier, seuls les enroulements inductifs des différents éléments ont été illustrés. Côté terminal 1, l'antenne L1 génère un champ magnétique (flèches 16) qui peut être considéré comme uniforme. La carte 2 capte ce champ grâce à son antenne L2. Côté carte, la rétromodulation peut être considérée comme engendrant des lignes de champ circulaires (flèches 26) autour des conducteurs de l'antenne L2.

La boucle 51 de mesure du champ primaire produit par le lecteur est adaptée pour présenter un couplage relativement faible vis-à-vis de l'enroulement d'antenne de la carte, tout en présentant une surface non négligeable vis-à-vis d'un champ localement homogène. La boucle 61 de mesure du champ secondaire est adaptée pour présenter un couplage notable vis-à-vis de l'enroulement d'antenne de la carte tout en présentant une surface faible (idéalement nulle) vis-à-vis d'un champ localement homogène.

Dans cet exemple, l'enroulement 51 de la première sonde 50 est formé d'une boucle tandis que l'enroulement de la deuxième sonde 60 est formé de deux boucles coplanaires 611 et 612 électriquement en série et décrivant approximativement un huit. Les deux sondes 50 et 60 sont placées entre les deux éléments 1 et 2 (entre les deux antennes L1 et L2), de préférence avec leurs enroulements dans des plans parallèles au plan de l'antenne L2

L'enroulement 51 destiné à capter le champ primaire est préférentiellement placé de façon symétrique par rapport aux conducteurs de l'antenne L2 de la carte. Pour simplifier, on ne considère ici que le cas d'un tronçon rectiligne 27 de l'antenne L2 dont la direction dans les plans des enroulements 51 et 61 est symbolisée par un pointillé. En plaçant la boucle circulaire 51 de façon symétrique sur l'antenne de la carte, aucune différence de potentiel n'apparaît aux bornes de l'enroulement 51 par le champ de la carte. La sonde 50 devient fortement couplée au lecteur. Dans un mode de réalisation simplifié, la boucle de l'enroulement 51 a une forme et une taille telles qu'elle entoure la spire moyenne de l'antenne de la carte. En variante, la boucle de l'enroulement 51 peut être formée de plusieurs sous-boucles.

Côté enroulement 61 de mesure du champ secondaire, décrire un huit permet d'annuler les effets de la force électromotrice induite par le champ primaire dans cet enroulement. La position de l'enroulement conditionne également l'efficacité des mesures. En le plaçant dans un plan parallèle à celui de l'enroulement de la carte, la surface présentée au champ du lecteur est nulle. On obtient donc une sonde peu sensible au champ du lecteur, capable d'observer sélectivement la carte. Pour accroître la sensibilité au champ secondaire (contenant la modulation provenant de la carte), on cherche à ce que les boucles 611 et 612 soient positionnées symétriquement par rapport au conducteur de l'antenne de la carte.

Différentes géométries sont envisageables pour les deux boucles électriquement en série formant l'enroulement 61.

Par exemple, une première boucle peut être à l'intérieur du tracé dans lequel s'inscrit l'antenne L2 et une deuxième boucle à l'extérieur comme dans l'exemple illustré en figure 7, mais avec des formes différentes (circulaires, rectangulaires, pinces, s'inscrivant respectivement à l'intérieur et autour de l'antenne L2, etc.). Grâce à la connexion électrique en série et l'inversion de sens entre les deux boucles pour que leurs orientations exposées au champ magnétique du lecteur soient inversées, les forces électromotrices induites par le lecteur dans les deux boucles se soustraient (s'annulent si les surfaces sont égales) alors que les forces électromotrices induites par la carte s'ajoutent.

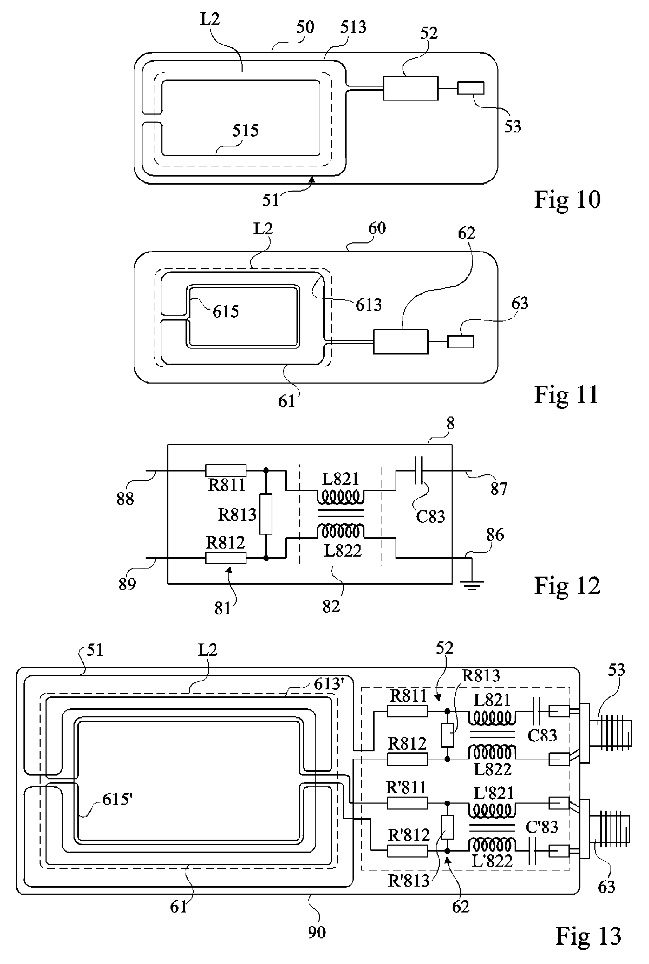

Selon d'autres exemples qui seront illustrés en relation avec les figures 11 et 13, les deux boucles s'inscrivent toutes deux à l'intérieur de l'encombrement de l'antenne L2, l'une des deux boucles étant plus au centre que l'autre de façon à ce qu'une des boucles soit plus près de l'antenne L2 et que la force électromotrice induite par la carte y soit plus importante que celle induite dans la boucle centrale, évitant ainsi que les deux se compensent. Les forces électromotrices induites par le lecteur dans les deux boucles continuent à se compenser pour des surfaces approximativement égales.

En variante, plusieurs sous-boucles composent l'une ou l'autre des boucles ou les deux, en respectant que leurs orientations exposées au champ magnétique du lecteur soient inversées.

Selon un mode de réalisation préféré de l'invention, le système comporte un dispositif 37 (LEVEL), symbolisé par un bloc en figure 4, d'aide au positionnement du dispositif de mesure. Un tel dispositif 37 peut être réalisé à l'aide d'un afficheur visuel simple (par exemple une rampe de diodes électroluminescentes) reflétant l'amplitude du signal démodulé, provenant des voies de traitement respectives ou au moins de la voie dédiée à la carte dont la sonde est la plus sensible au positionnement.

Les dimensions des boucles des sondes 51 et 61 sont fonction du type de transpondeur dont on souhaite capter l'information. Dans le cas d'une carte plane, on tient compte de la taille de la spire moyenne (on fait référence à la spire moyenne car la carte peut comporter plusieurs spires concentriques).

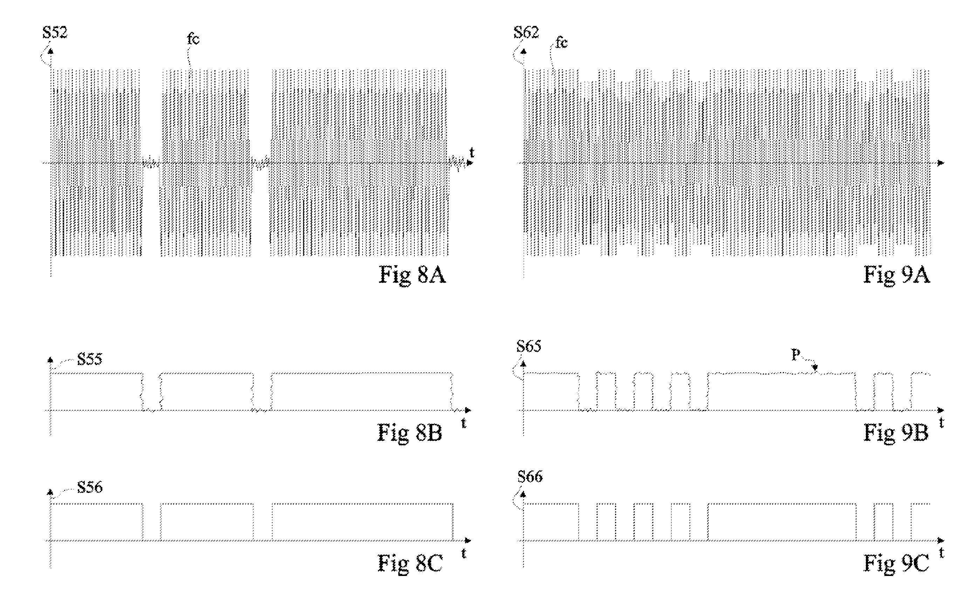

Les figures 8A, 8B et 8C illustrent, par des chronogrammes, des exemples d'allures de signaux S52, S55 et S56 obtenus aux sorties respectives des circuits 52, 55 et 56 de la voie destinée au lecteur 1.

Les figures 9A, 9B et 9C illustrent, par des chronogrammes, des exemples d'allures de signaux S62, S65 et S66 obtenus aux sorties respectives des circuits 62, 65 et 66 de la voie destinée à la carte 2. Les échelles des figures 8 et 9 sont différentes.

Dans cet exemple correspondant à la norme ISO 14443 (type A), la modulation de la porteuse à 13,56 MHz est effectuée par le terminal en amplitude avec un index de modulation de 100 % (index de modulation = rapport entre la différence et la somme des amplitudes), c'est-à-dire en tout ou rien. La modulation d'amplitude s'effectue à un rythme de 106 kbit/s à 847 kbit/s après codage des informations selon différents protocoles (dans cet exemple, un codage dit de Miller). La porteuse modulée en amplitude est récupérée par la sonde 50 qui fournit (sortie S52) un signal image de cette modulation. En sortie S55 du convertisseur analogique-numérique synchrone, la porteuse a été éliminée et seule l'enveloppe de la modulation est restituée. La sortie S56 du filtre 56 fournit un signal numérique moins bruité, exploitable par le décodeur 35.

Lors d'une transmission dans le sens carte vers lecteur, la modulation de l'impédance chargeant le circuit résonnant est effectuée au rythme d'une sous-porteuse de rétromodulation à 847,5 kHz (un seizième de la porteuse à 13,56 MHz). La commutation du circuit (24, figure 3) de modification de la charge est, là encore, généralement codée. Dans l'exemple représenté, on suppose une modulation d'amplitude avec un codage dit de Manchester, mais il peut s'agir également d'autres formes de codage (par exemple, BPSK). La sortie S64 fournit une image de la modulation de charge. Comme pour la première voie, en sortie du convertisseur synchrone, la porteuse à 13,56 MHz a été éliminée et ne reste plus que l'enveloppe de la sous-porteuse. La sortie S66 du filtre 66 fournit un signal numérique moins bruité, exploitable par le décodeur.

D'autres codages (NRZ, déphasage différentiel, etc.) et modulations peuvent être utilisés, notamment selon la norme concernée. Par exemple, pour la norme ISO-14443 type B, la modulation de la porteuse à 13,56 MHz est effectuée par le terminal en amplitude avec un index de modulation de l'ordre de 10 %.

Grâce aux sondes dédiées aux champs primaire et secondaire, l'interprétation par le décodeur 35 est aisée dans la mesure où les signaux provenant de la modulation côté lecteur et de la modulation côté carte sont facilement dissociables. En particulier, une modulation de la carte peut être traitée par la voie adaptée au lecteur comme du bruit car son amplitude est nettement plus faible que celle du lecteur. A l'inverse, côté voie adaptée à la carte, le fait que la contribution du champ primaire soit atténuée par la sonde 61 permet d'accroître la sensibilité et la comparaison entre les deux voies permet de dissocier une modulation d'un bruit éventuel.

Bien entendu, l'invention n'est pas limitée à l'exemple de modulation ci-dessus. Elle permet de récupérer l'enveloppe de modulation que cette modulation soit en amplitude ou en phase et quel que soit le codage utilisé pour transmettre les données. Les voies d'acquisition permettent d'obtenir les données démodulées dont le décodage et l'interprétation sont effectuées en aval par le décodeur 35 ou par l'ordinateur 4.

La figure 10 représente, de façon schématique, un mode de réalisation d'une sonde 50 adaptée au champ du lecteur. Cette sonde est, par exemple, formée sur une plaquette de circuit imprimé. L'enroulement 51 est formé d'une piste conductrice dont le tracé a la forme générale d'une pince (de forme générale rectangulaire) dont l'extérieur 513 des mâchoires est à l'extérieur de l'encombrement de la spire moyenne (pointillé référencé L2) des cartes auxquelles est destinée la sonde et dont l'intérieur 515 des mâchoires se retrouve à l'intérieur de cette spire moyenne. Ceci afin de respecter au mieux la symétrie de la boucle 51 autour de la spire moyenne de l'antenne L2 lorsque la sonde est placée de façon coplanaire à l'antenne. Les deux extrémités de l'enroulement 51 sont à l'opposé de l'ouverture de la pince et sont sur l'extérieur des mâchoires. Ces extrémités sont reliées en entrée du circuit 52 dont un exemple de réalisation sera décrit par la suite en relation avec la figure 12. Un tel circuit a pour but de minimiser le courant dans l'enroulement de la sonde pour éviter de perturber la communication. Le cas échéant, il effectue également une adaptation d'impédance et/ou un changement de mode symétrique en mode asymétrique pour rendre les signaux exploitables par les circuits avals. La sortie du circuit 52 est reliée à un connecteur 53 destiné à être raccordé au dispositif 3 de traitement des signaux.

La figure 11 représente, de façon schématique, un mode de réalisation d'une sonde 60 adaptée à la carte. Cette sonde est, par exemple, également formée sur une plaquette de circuit imprimé et ses boucles 61 en huit sont, de préférence, réalisées de telle sorte que leur encombrement global est situé à l'intérieur de la spire moyenne (pointillé référencé L2) de la carte. Cela conduit à une allure générale en forme de pince (de forme générale rectangulaire) pour une première boucle 613 imbriquée avec une deuxième boucle 615 à l'intérieur de cette pince, tout ceci bien entendu au moyen d'un seul conducteur. Les deux extrémités de l'enroulement 61 sont d'un côté extérieur de la première boucle à l'opposé de l'ouverture de la pince. Ces extrémités sont reliées au circuit 62 avant que les signaux à traiter soient fournis à un connecteur 63 pour liaison au dispositif d'acquisition. Les surfaces des deux boucles 613 et 615 sont de préférence approximativement égales.

La figure 12 représente le schéma électrique d'un circuit 52 ou 62. Un tel circuit référencé 8 en figure 12 comporte, entre deux bornes 88 et 89 d'entrée, dites de mode symétrique destinées à être connectées aux bornes de la boucle 51 ou 61, et deux bornes de sortie 87 et 86 dites de mode asymétrique destinées à être connectées au circuit d'analyse 3, un circuit d'adaptation d'impédance 81, un transformateur à changement de mode 82 et un circuit 83 de découplage. Par exemple, le circuit d'adaptation d'impédance est constitué de trois résistances R811, R812 et R813, les résistances R811 et R812 ayant une première extrémité reliée aux bornes 88 et 89 et une deuxième extrémité reliée aux extrémités respectives de la résistance R813 et aux entrées de mode symétrique du transformateur à changement de mode. Le transformateur 82 est, par exemple, constitué de deux éléments inductifs L821 et L822 couplés dont deux premières extrémités respectives sont connectées aux entrées de mode symétrique et dont deux deuxièmes extrémités respectives définissent les bornes positive et de référence de l'accès de mode asymétrique. Les deux accès de mode asymétrique du transformateur 82 sont reliés aux bornes 87 et 86 (la borne 86 définissant arbitrairement la masse), l'accès relié à la borne 87 l'étant par l'intermédiaire d'un condensateur C83 de découplage.

Dans le mode de réalisation des figures 10 et 11 ci-dessus, les deux sondes 50 et 60 sont mécaniquement séparées l'une de l'autre, permettant ainsi à l'opérateur de les placer entre le terminal et la carte dans des positions où il obtient, empiriquement, les résultats les meilleurs pour chacune d'entre-elles. Idéalement, la meilleure sensibilité est obtenue pour la carte testée avec l'enroulement 61 dimensionné pour que son tracé externe ou interne puisse être placé le plus près possible du tracé de l'enroulement L2.

La figure 13 représente un mode de réalisation préféré d'un dispositif de mesure 90 d'un analyseur de protocole selon la présente invention. Dans cet exemple, les deux sondes respectivement dédiées à capter le champ du terminal 1 et de la carte 2 sont portées par un même support (par exemple une même plaquette de circuit imprimé). Les enroulements 51 et 61 sont, comme dans les modes de réalisation des figures 10 et 11 tels que la spire moyenne (pointillé référencé L2) de la famille de cartes à laquelle est destiné le dispositif 90 soit approximativement à l'intérieur de la pince formant la boucle 51 et soit approximativement à l'extérieur des boucles en huit formant l'enroulement 61. Les enroulements 51 et 61 sont formés dans des niveaux conducteurs différents, de préférence, chacun sur une face de la plaquette. Bien entendu, un pont ou via est utilisé pour le croisement de piste de l'enroulement 61. Par rapport à la figure 11, la figure 13 illustre une variante dans laquelle la première boucle 613' forme une pince à l'intérieur de laquelle est tracée la deuxième boucle 615'. Les deux extrémités de l'enroulement 61 sont d'un côté de la deuxième boucle 615' correspondant au côté d'ouverture de la pince de la première boucle 613' dont les mâchoires sont jointes par l'intérieur du côté opposé. Comme précédemment, les surfaces respectives définies par les boucles 613' et 615' sont approximativement égales et ces boucles sont connectées électriquement en série de telle sorte que le sens de parcours soit inversé pour minimiser la sensibilité vis-à-vis du champ homogène du lecteur.

En figure 13, les deux circuits de mise en forme 52 et 62 ont été représentés par leur schémas électriques équivalents respectifs en reprenant l'exemple du circuit 8 de la figure 12 et en affectant les références numériques d'une apostrophe (') pour les composants du circuit 62. Les connecteurs 53 et 63 sont fonction des circuits avals et, dans cet exemple, ont été illustrés sous la forme de connecteurs de câble coaxial.

Le dispositif de la figure 13 est, de préférence, destiné à être plaqué contre la carte 2 avec sa face comportant l'enroulement 61 côté carte, et en positionnant l'enroulement 61 le plus centré possible par rapport à l'antenne 12 de la carte à tester. Cela suppose que la boucle 613' ait été dimensionnée pour pouvoir être de tout côté le plus près possible de l'antenne des cartes auxquelles est destiné le dispositif.

A titre d'exemple particulier de réalisation, un dispositif de mesure 90 tel qu'illustré en figure 13 a été réalisé, pour des cartes dont l'antenne a une spire moyenne de forme générale rectangulaire d'une longueur d'environ 68,5 mm et d'une largeur d'environ 38,5 mm, avec les dimensions suivantes :
premier enroulement 51 : largeur externe d'environ 51 mm, longueur externe d'environ 83 mm, largeur interne d'environ 30 mm, longueur interne d'environ 60 mm, écart entre les mâchoires du côté opposé aux extrémités de l'enroulement d'environ 2 mm ; et
deuxième enroulement 61 : largeur externe d'environ 38 mm, longueur interne d'environ 68 mm, largeur interne d'environ 24 mm, longueur interne d'environ 54 mm, écart entre les mâchoires de la pince du côté des extrémités de l'enroulement d'environ 3 mm, écart des pistes de liaison du côté opposé aux extrémités de l'enroulement d'environ 1 mm.

Un avantage de la présente invention est qu'elle améliore la fiabilité des systèmes d'analyse de protocole.

Un autre avantage de la présente invention est que le dispositif de mesure est facilement adaptable à différentes familles de transpondeurs et de lecteurs en adaptant les dimensions des deux enroulements selon la taille moyenne de l'antenne du transpondeur.

Bien entendu, la présente invention est susceptible de diverses variantes et modifications qui apparaîtront à l'homme de l'art. En particulier, les caractéristiques des éléments analogiques et numériques sont à la portée de l'homme du métier à partir des indications fonctionnelles données ci-dessus.

De même, le choix entre un mode de réalisation à deux enroulements sur des supports distincts ou à un seul support dépend de l'application et notamment de la distance habituelle entre le transpondeur et son lecteur.

En outre, les signaux fournis par les filtres 56 et 66 sont interprétables par des décodeurs usuels. De tels décodeurs sont réalisés soit à base d'un microprocesseur soit en logique câblée, cette dernière réalisation étant souvent préférée pour respecter les besoins de vitesse de traitement.

Enfin, si l'emploi de deux voies d'acquisition séparées jusqu'au décodeur 35 constitue un mode de réalisation préféré, le multiplexage des signaux pourra intervenir en amont du décodeur, notamment pour des systèmes half-duplex dans lesquels la carte et le lecteur ne sont pas censés transmettre en même temps.

L'invention trouve de nombreuses applications dans les systèmes à transpondeurs qu'il s'agisse de systèmes dénommés carte sans contact, tag, étiquettes, etc. et que le terminal soit dénommé lecteur, interrogateur, etc. Différentes normes fixent des conditions de fonctionnement pour de tels systèmes d'échanges sans contact. A titre d'exemple, on citera les normes ISO 14443, 15693, 18000-2 et 18000-3.

## Revendications

1. Dispositif (50, 60 ; 90) de mesure de variations d'un champ magnétique généré par un premier élément (1) et susceptible d'être modulé par ce premier élément ainsi que par un deuxième élément (2) distinct présent dans le champ, **caractérisé en ce qu'**il comporte un premier enroulement (51) adapté au premier élément et un deuxième enroulement (61) adapté au deuxième élément, le dispositif de mesure étant distinct des deux éléments.

2. Dispositif selon la revendication 1, dans lequel le deuxième enroulement (61) comporte au moins deux boucles (611, 612 ; 613, 615 ; 613', 615') associées de telle sorte que le courant induit par le champ du premier élément (1) change de sens d'une boucle à l'autre, les deux boucles étant électriquement en série.

3. Dispositif selon la revendication 2, dans lequel une première boucle (612) du deuxième enroulement (61) a une forme et une taille telles que cette boucle peut s'inscrire à l'intérieur du tracé d'une antenne plane (L2) du deuxième élément (2), une deuxième boucle (611) ayant une forme et une taille telles à être alors à l'extérieur dudit tracé.

4. Dispositif selon la revendication 2, dans lequel les boucles (613, 615 ; 613', 615') du deuxième enroulement (61) ont des formes et tailles telles qu'elles peuvent s'inscrire à l'intérieur du tracé d'une antenne plane (L2) du deuxième élément (2), une des deux boucles étant plus centrale que l'autre par rapport à ce tracé.

5. Dispositif selon la revendication 4, dans lequel une première boucle (613') a la forme approximative d'une pince d'une taille telle que ses mâchoires peuvent s'inscrire à l'intérieur du tracé de l'antenne (L2) du deuxième élément (2), une deuxième boucle (615') ayant un tracé s'inscrivant approximativement à l'intérieur de la première boucle.

6. Dispositif selon l'une quelconque des revendications 2 à 5, dans lequel les surfaces définies par les deux boucles (611, 612 ; 613, 615 ; 613', 615') sont approximativement égales.

7. Dispositif selon l'une quelconque des revendications 1 à 6, dans lequel le premier enroulement (51) forme une boucle en forme de pince d'une taille telle que le tracé d'une antenne plane (L2) du deuxième élément (2) est propre à s'inscrire entre les tracés externe (513) et interne (515) des mâchoires de la pince.

8. Dispositif selon l'une quelconque des revendications 1 à 7, dans lequel les deux enroulements (51, 61) sont réalisés sur un même support (90).

9. Système d'analyse d'une communication radiofréquence entre un premier élément (1) d'émission d'un champ magnétique capté par un deuxième élément (2) susceptible de moduler ce champ, **caractérisé en ce qu'**il comporte :
un dispositif de mesure distinct des deux éléments et pourvu de deux enroulements (51, 61) respectivement adaptés au premier et au deuxième éléments ; et
un dispositif d'analyse (3) pourvu de deux voies d'acquisition respectivement dédiées aux deux enroulements.

10. Système selon la revendication 9, dans lequel chaque voie d'acquisition comporte un convertisseur analogique-numérique synchrone (55, 65).

11. Système selon l'une quelconque des revendications 9 et 10, comportant un dispositif (37) pourvu d'un indicateur visuel d'aide au positionnement d'au moins un des enroulements (61) par rapport au deuxième élément (2) au moyen d'une mesure d'amplitude du signal détecté.

12. Système selon l'une quelconque des revendications 9 à 11, dans lequel le dispositif de mesure est conforme à l'une quelconque des revendications 1 à 8.

13. Système selon l'une quelconque des revendications 9 à 12, dans lequel le deuxième élément est une carte à puce sans contact (2) et le premier élément est un lecteur de cartes (1).
